# EUROPEAN PATENT APPLICATION

(11) **EP 1 785 691 A2**
(43) Date of publication of application: **16.05.2007**
(21) Application number: 06123709.5
(22) Date of filing: 08.11.2006
(51) Int. Cl.: G01B 9/02

(54) **Interferometry system**

(30) Priority: 09.11.2005 JP 2005324349
(71) Applicant: Canon Kabushiki Kaisha, Ohta-Ku, Tokyo 146-8501 (JP)
(72) Inventor: Kato, Shigeki, Ohta-ku Tokyo (JP)
(74) Representative: Sharp, Alan Cooper

(57) **Abstract**

Beams having wavelengths of λ1 and λ2 individually emitted from two light sources are combined through an optical fiber (25). The combined beam is emitted from an output end face of the optical fiber and then separated by a polarizing beam splitter (27). A first separated beam is reflected by a measurement target (S), whereas a second separated beam is reflected by a reference mirror (30).
Both beams are combined, and the combined beam is separated into a beam having a wavelength of λ1 and that of λ2. The separated beams enter respective photoelectric conversion elements (36c, 36e). By obtaining one period of an electric signal having a sinusoidal wave for a displacement of (1/2)λ1 and that of (1/2)λ2, a displacement gauge for measuring the amount of displacement of a measurement target is provided.

## Description

### BACKGROUND OF THE INVENTION

### Field of the Invention

The present invention relates to an interferometry system for detecting the amount of displacement of a measurement target in a non-contact manner.

### Description of the Related Art

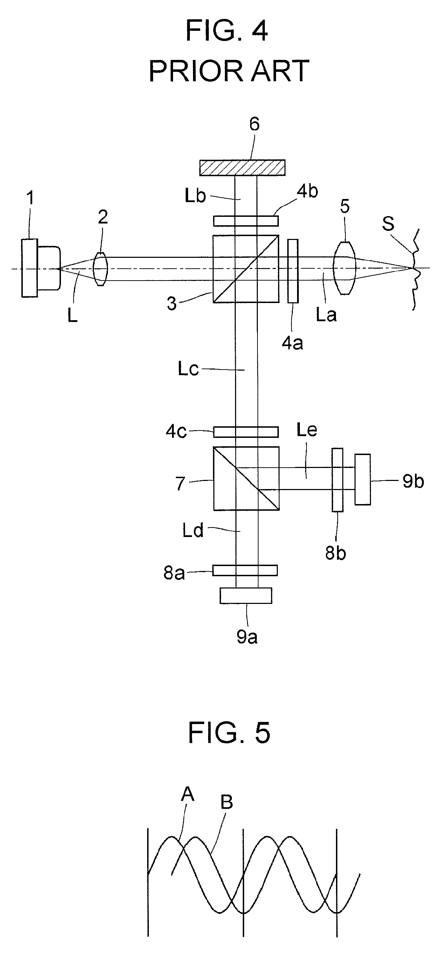

Fig. 4 illustrates a first conventional interferometry system. A beam L of laser light emitted from a semiconductor laser light source 1 is collimated into a parallel beam by a collimating lens 2. The parallel beam is separated into a measurement beam La and a reference beam Lb by a polarizing beam splitter 3. The measurement beam La passes through a quarter-wave plate 4a and is then converged by a condenser lens 5. The converged measurement beam La is reflected by a measurement target S.

The reference beam Lb reflected from the polarizing beam splitter 3 passes through a quarter-wave plate 4b and then reflected by a reference mirror 6.

The beam La reflected from the measurement target S and the beam Lb reflected from the reference mirror 6 pass through the quarter-wave plate 4a and the quarter-wave plate 4b, respectively, again. Then, the reference beam Lb passes through the polarizing beam splitter 3, the measurement beam La is reflected by the polarizing beam splitter 3, and the beams La and Lb are formed into a combined beam Lc. The combined beam Lc enters a quarter-wave plate 4c.

For the combined beam Lc, only polarization information of the light of the measurement beam La reflected from the measurement target is modulated. Therefore, a beam that has passed through the quarter-wave plate 4c is rotating linearly polarized light.

Then, the combined beam Lc enters a non-polarizing beam-splitter 7 and is separated into measurement beams Ld and Le. The measurement beams Ld and Le pass through polarizing plates 8a and 8b, respectively. The polarizing plates 8a and 8b are disposed so that their respective optic axes are inclined 45° with respect to each other, so that sinusoidal signals A and B which are 90° out of phase with respect to each other, as shown in Fig. 5, are obtained in photoelectric sensors 9a and 9b, respectively.

The polarization direction of the combined beam Lc is rotated by displacement of the measurement target S. As a result, in response to displacement of the measurement target S, one period of a sinusoidal signal is obtained at a displacement of λ/2. This conventional displacement gauge outputs incremental sinusoidal signals. However, only relative positions after measurement begins can be obtained because there is no information on the reference (start) positions.

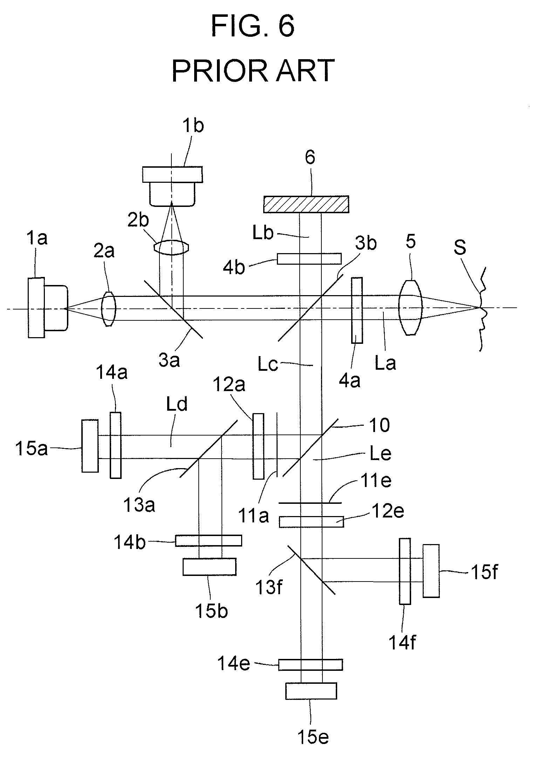

Fig. 6 illustrates a second conventional interferometry system, which improves upon the first conventional interferometry system. A beam having a wavelength of λ1 is emitted from a semiconductor laser light source 1a. A beam having a wavelength of λ2 is emitted from a semiconductor laser light source 1b. The beams are collimated into parallel beams by corresponding collimating lenses 2a and 2b. Then, a combined beam Lc in which the measurement beam La and reference beam Lb are combined is generated by using a polarizing beam splitter 3b, as in the case of Fig. 4.

The combined beam Lc enters a non-polarizing beam-splitter 10 and is separated into measurement beams Ld and Le. The beam Ld passes through a band-pass filter 11a which allows light having a wavelength of λ1 to pass therethrough. The transmitted beam holds information indicating a wavelength of λ1 alone. The beam Ld with a wavelength of λ1 passes through a quarter-wave plate 12a, thus becoming linearly polarized light. For information on polarization, the polarization direction rotates on the basis of changes in the position of the measurement target S. The rotating linearly polarized light beam Ld is separated by a non-polarizing beam-splitter 13a. The transmitted light and the reflected light pass through a polarizing plate 14a and a polarizing plate 14b, respectively, thus becoming intensity signals. The intensity signals enter corresponding photoelectric sensors 15a and 15b and converted into electric signals. At this time, each of the photoelectric sensors 15a and 15b outputs one period of a sinusoidal signal for a displacement of (1/2)λ1 of the measurement target S.

The beam Le, which has passed through the non-polarizing beam-splitter 10, passes through a band-pass filter 11e which allows light having a wavelength of λ2 to pass therethrough. The transmitted light holds information indicating a wavelength of λ2 alone. The transmitted light passes through a quarter-wave plate 12e and then is separated by a non-polarizing beam-splitter 13f. The separated beams pass through corresponding polarizing plates 14e and 14f and enter corresponding photoelectric sensors 15e and 15f. In this case, each of the photoelectric sensors 15e and 15f outputs one period of a sinusoidal signal for a displacement of (1/2)λ2 of the measurement target S.

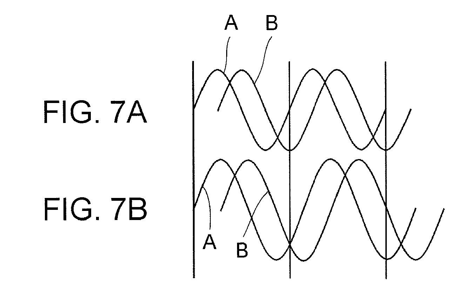

The periods of sinusoidal signals A and B obtained by this structure are acquired in response to a displacement of the measurement target S. As illustrated in Figs. 7A and 7B, the periods are λ1/2 and λ2/2, respectively. The phase difference of the two kinds of signals is zero when the optical path length of the reference beam Lb coincides with that of the measurement beam La. The phase difference is produced in accordance with the difference of the optical path length. Observing the phase difference allows measurement of absolute positions of the measurement target S.

In the conventional systems described above, absolute positions can be measured at a predetermined constant distance. For example, when practical wavelengths, e.g., 650 nm and 655 nm, are selected, the phase shift between adjacent sinusoidal signals is no larger than one hundredth of the period of the original sinusoidal signal.

For detection with sufficient accuracy, significantly precise stability of about one five-hundredth of the period is required.

In the case of a structure like the conventional system shown in Fig. 6, it is necessary to set the optical axes and the positions of the two semiconductor laser light sources 1a and 1b with precision. However, it is difficult to maintain stability of a phase difference at or below the one five-hundredth of the period (= 1.3 nm) because of effects of variations in the optical axes, minute inclination of the target, and other factors.

In addition, since the semiconductor laser light sources 1a and 1b are disposed in the vicinity of an optical system, the optical system is radiated with a large amount of heat and affected by the heat. This causes unstable phase differences.

### SUMMARY OF THE INVENTION

The present invention provides a stable high-precision interferometry system that uses an optical fiber.

According to a first aspect of the present invention, there is provided an interferometry system as specified in claims 1 to 9.

One of the major technical features of an interferometry system according to at least one exemplary embodiment of the present invention is to emit a reference beam and a measurement beam from an output end face of the same optical fiber toward a light transmission member in an interferometry system, such as the one described above.

The interferometry system according to at least one exemplary embodiment of the present invention can measure absolute positions more precisely by emitting a beam having a plurality of wavelengths as measurement and reference beams from an output end face of the same optical fiber.

The interferometry system can also measure a plurality of wavelengths with a simpler configuration by guiding a beam having a plurality of wavelengths emitted from output end faces of different optical fibers into the same optical fiber via a combiner.

In addition, the interferometry system can also improve the optical-fiber stability and perform measurement more precisely by polarizing a beam from an output end face of the same optical fiber by using a polarizing element.

Moreover, if using a polarization maintaining fiber as the optical fibers for guiding beams into the combiner, the interferometry system can also perform measurement more precisely.

Further features of the present invention will become apparent from the following description of exemplary embodiments with reference to the attached drawings.

### BRIEF DESCRIPTION OF THE DRAWINGS

Fig. 1 illustrates a configuration of an interferometry system according to a first exemplary embodiment of the present invention.

Figs. 2A and 2B are waveform diagrams of output signals of the interferometry system according to the first exemplary embodiment.

Fig. 3 illustrates a configuration of an interferometry system according to a second exemplary embodiment of the present invention.

Fig. 4 illustrates a configuration of a first conventional interferometer.

Fig. 5 is a waveform diagram of an output signal in the first conventional interferometer.

Fig. 6 illustrates a configuration of a second conventional interferometer.

Fig. 7A and 7B are waveform diagrams of an output signal in the second conventional interferometer.

### DESCRIPTION OF THE EMBODIMENTS

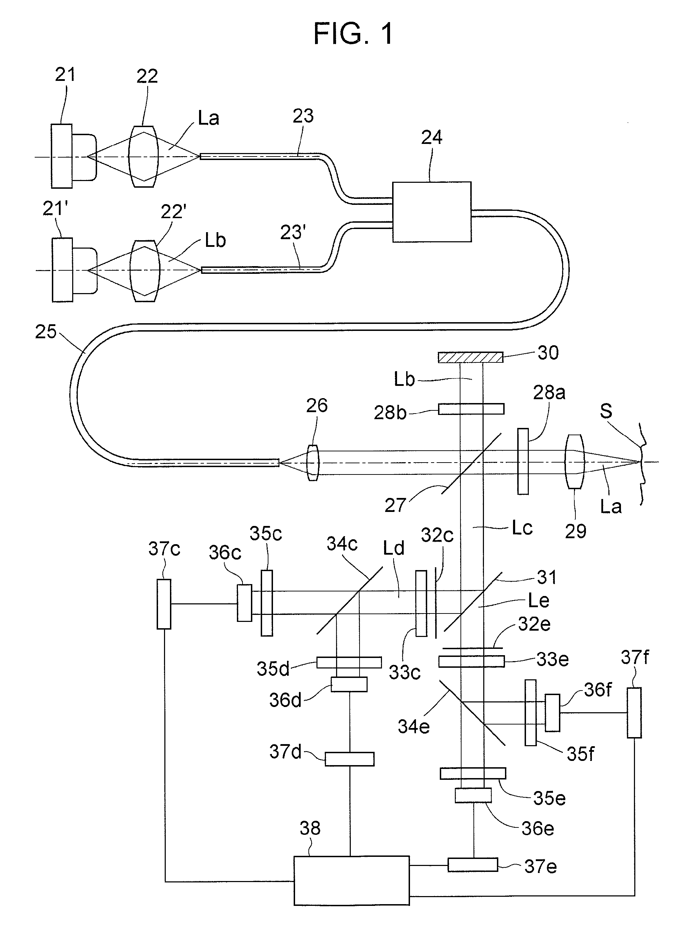

The present invention is described on the basis of exemplary embodiments illustrated in Figs. 1 to 3.

### First Exemplary Embodiment

Fig. 1 illustrates a configuration of an interferometry system according to a first exemplary embodiment. Lenses 22 and 22' are disposed along the optical axes of semiconductor laser light sources 21 and 21', respectively. The input end faces of polarization maintaining fibers 23 and 23' are disposed at the converging points of the lenses 22 and 22', respectively. The output end face of the two polarization maintaining fibers 23 and 23' are connected to a combiner 24. The output end face of the combiner 24 is connected to an input end face of another optical fiber 25. The optical fibers are preferably single mode optical fibers, and a commercially available combiner such as, for example, an OBS-6800+CD combiner available from Leitch Technology Corporation, can be used.

A collimating lens 26, a polarizing beam splitter 27, a quarter-wave plate 28a, a condenser lens 29, and a measurement target S are arranged along the optical axis of the output end face of the optical fiber 25.

A quarter-wave plate 28b and a reference mirror 30 are arranged along the direction of reflection of the polarizing beam splitter 27.

A non-polarizing beam-splitter 31 is disposed in the direction of reflection of the reference mirror 30, i.e., in a direction in which a beam reflected from the reference mirror 30 passes through the polarizing beam splitter 27.

A band-pass filter 32c which allows a beam having a wavelength of λ1 to pass therethrough, a quarter-wave plate 33c, a non-polarizing beam-splitter 34c, a polarizing plate 35c, and a photoelectric sensor 36c are arranged along the direction of reflection of the non-polarizing beam-splitter 31.

A polarizing plate 35d and a photoelectric sensor 36d are disposed along the direction of reflection of the non-polarizing beam-splitter 34c.

A band-pass filter 32e which allows a beam having a wavelength of λ2 to pass therethrough, a quarter-wave plate 33e, a non-polarizing beam-splitter 34e, a polarizing plate 35e, and a photoelectric sensor 36e are arranged along the direction of transmission of the non-polarizing beam-splitter 31.

A polarizing plate 35f and a photoelectric sensor 36f are disposed along the direction of reflection of the non-polarizing beam-splitter 34e.

A laser measurement beam La with a wavelength of λ1 emitted from the semiconductor laser light source 21 is converged by the lens 22 and then guided into the input end face of the polarization maintaining fiber 23. A laser reference beam Lb with a wavelength of λ2 emitted from the semiconductor laser light source 21' is converged by the lens 22' and then guided into the input end face of the polarization maintaining fiber 23'. The emitted beams from the polarization maintaining fibers 23 and 23' are guided into the optical fiber 25 via the combiner 24.

A beam in which wavelengths of λ1 and λ2 coexist is emitted from the output end face of the optical fiber 25. Then, the emitted beam is separated into P and S waves by the plane of the polarizing beam splitter 27. The beam that has passed through the polarizing beam splitter 27 passes through the quarter-wave plate 28a as the measurement beam La. The measurement beam La is converged by the condenser lens 29 to form a converged beam. The measurement target S is radiated with the converged beam.

The beam reflected from the polarizing beam splitter 27 is defined as the reference beam Lb. The reference beam Lb passes through the quarter-wave plate 28b and then reflected by the reference mirror 30.

The measurement beam La that has reached the measurement target S is reflected by the measurement target S. Then, the measurement beam La returns an optical path along which the measurement beam La traveled and is reflected by the polarizing beam splitter 27.

The reference beam Lb reflected from the reference mirror 30 returns an optical path along which the reference beam Lb traveled and then passes through the polarizing beam splitter 27. Then, the reference beam Lb and the measurement beam La are combined into a combined beam Lc. The combined beam Lc then enters the non-polarizing beam-splitter 31 and is separated. Light reflected from the non-polarizing beam-splitter 31 is defined as a beam Ld, and transmitted light is defined as a beam Le.

When the power of the condenser lens 29 is set such that the converging point of the measurement beam La on the measurement target S is equal in wave-optics optical path length to the reference mirror 30, which reflects the reference beam Lb, the interferometry system can achieve optimal performance.

In other words, both the light reflected from the measurement target S and the light reflected from the reference mirror 30 are combined as parallel light.

The beam Ld passes through the band-pass filter 32c, which transmits light having a wavelength of λ1, but does not transmit light having a wavelength of λ2. The transmitted light holds information indicating a wavelength of λ1 alone. The beam with a wavelength of λ1 passes through the quarter-wave plate 33c, thus becoming linearly polarized light. For the beam that has passed through the quarter-wave plate 33c, its polarization direction rotates on the basis of displacement of the measurement target S. The rotating linearly polarized light beam Ld is separated by the non-polarizing beam-splitter 34c.

The transmitted light and the reflected light pass through the polarizing plate 35c and the polarizing plate 35d, respectively, thus becoming intensity signals. The intensity signals enter the corresponding photoelectric sensors 36c and 36d and are converted into electric signals.

Each of the electric signals is one period of a sinusoidal signal for a displacement of (1/2)λ1 of the measurement target S.

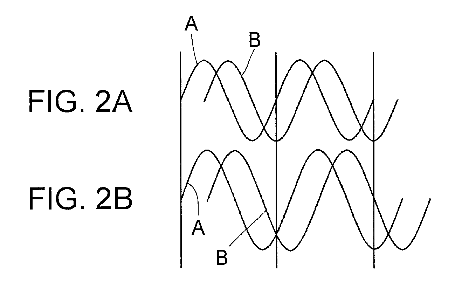

The polarizing plates 35c and 35d are disposed such that their respective polarization axes are inclined 45° with respect to each other. As illustrated in Fig. 2A, sinusoidal signals from the photoelectric sensors 36c and 36d are signals having A and B phases which are 90° out of phase with respect to each other.

The beam Le that has passed through the non-polarizing beam-splitter 31 passes through the band-pass filter 32e, which transmits light having a wavelength of λ2, but does not transmit light having a wavelength of λ1. The transmitted light holds information indicating a wavelength of λ2 alone.

The beam Le passes through the quarter-wave plate 33e and is then separated into two components by the non-polarizing beam-splitter 34e. The separated beams pass through the corresponding polarizing plates 35e and 35f and then enter the corresponding photoelectric sensors 36e and 36f.

Each of the photoelectric sensors 36e and 36f outputs one period of a sinusoidal signal for a displacement of (1/2)λ2 of the measurement target S.

Since the polarizing plates 35e and 35f are disposed such that their respective polarization axes are inclined 45° with respect to each other, the obtained electric signals are sinusoidal signals having A and B phases which are 90° out of phase with respect to each other, as illustrated in Fig. 2B.

Signal processing circuits 37c, 37d, 37e, and 37f process signals from the photoelectric sensors 36c, 36d, 36e, and 36f.

A processing circuit (central processing unit (CPU)) 38 receives signals processed in the signal processing circuits 37c to 37f, and calculates the amount of displacement.

It is to be noted that the beams having wavelengths of λ1 and λ2 from the two semiconductor laser light sources 21 and 21' are able to be treated as a complete point source at the output end face of the optical fiber 25.

It is also to be noted that the two beams having two wavelengths λ1 and λ2 are present at the same spatial point at the location of the point source.

In other words, in the case where the interferometry system is structured as a displacement gauge, the output end faces of the two beams move identically in an optical system in the interferometry system in response to displacement and inclination of a target. As a result, no phase shift occurs between the two beams.

For example, when 650 nm and 655 nm are selected, as in the case of conventional systems, a high degree of precision for approximately one five-hundredth of the period (1.3 nm) needed to identify the phase difference between adjacent sinusoidal signals can be obtained.

In addition, since the semiconductor laser light sources 21 and 21', which generate a large amount of heat, are remote from the optical system by virtue of the optical fibers 23, 23', and 25, a main heat source is not present in the vicinity of the optical system. Therefore, this exemplary embodiment is useful in terms of the stability of the optical system.

### Second Exemplary Embodiment

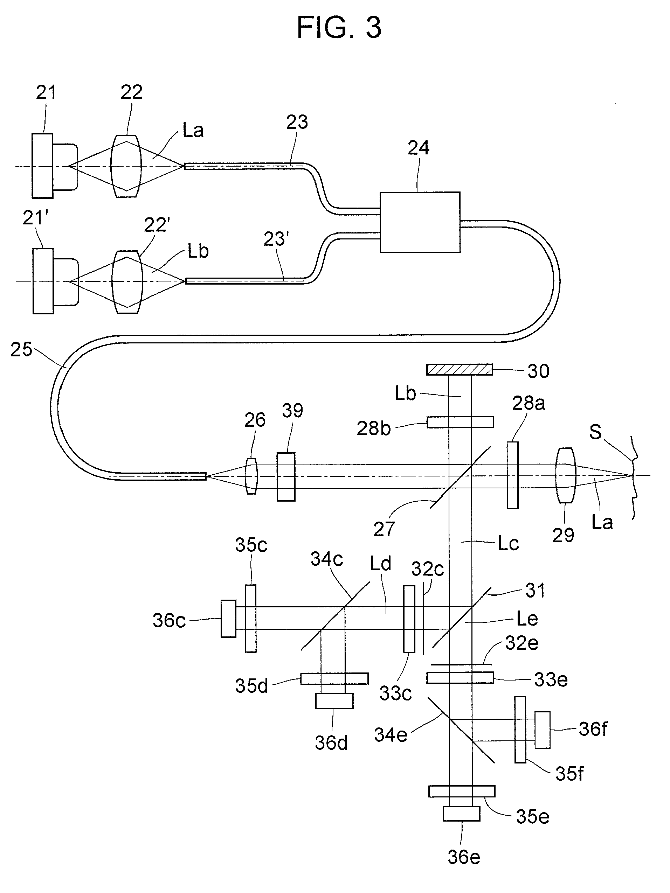

Fig. 3 illustrates a configuration of an interferometry system according to a second exemplary embodiment.

In this exemplary embodiment, a polarizing plate 39 is inserted immediately after the collimating lens 26. In Fig. 3, the same reference numerals as in Fig. 1 represent components having the same functions as in Fig. 1.

Generally, polarization maintaining fibers do not have a function of maintaining polarization for optical components perpendicular to polarization planes. Therefore, light emitted from polarization maintaining fibers have instability of polarization.

However, since the provision of the polarizing plate 39 having a high extinction ratio enables the displacement-gauge optical system to obtain a more stable beam, a displacement gauge with higher stability and higher precision than the first exemplary embodiment can be obtained.

While the present invention has been described with reference to exemplary embodiments, it is to be understood that the invention is not limited to the disclosed exemplary embodiments. The scope of the following claims is to be accorded the broadest interpretation so as to encompass all modifications, equivalent structures and functions.

## Claims

1. An interferometry system comprising:
a combiner (24) configured to combine a first beam having a first wavelength and a second beam having a second wavelength into a third beam;
a separation and combination optical member (27) configured to separate the incident third beam into a reference beam and a measurement beam and to combine the reference beam reflected from a reference mirror (30) and the measurement beam reflected from a measurement target into a fourth beam;
an optical separator (31) configured to separate the fourth beam into a fifth beam and a sixth beam;
an optical filter (32c) configured to allow a beam having the first wavelength from the fifth beam to pass therethrough;
an optical filter (32e) configured to allow a beam having the second wavelength from the sixth beam to pass therethrough;
a photoelectric sensor (36c) configured to receive the transmitted beam having the first wavelength and to convert the beam into an electric signal;
a photoelectric sensor (36e) configured to receive the transmitted beam having the second wavelength and to convert the beam into an electric signal; and
a calculation unit (38) configured to receive the electric signals and to calculate the amount of displacement of the measurement target,
wherein the third beam is emitted from a first optical fiber (25).

2. The interferometry system according to Claim 1, wherein the first and second beams are guided into second and third optical fibers (23, 23'), respectively, then combined by the combiner, and then guided into an input end face of the first optical fiber.

3. The interferometry system according to Claim 2, wherein the second and third optical fibers are polarization maintaining optical fibers.

4. The interferometry system according to Claim 1, wherein a beam from an output end face of the first optical fiber is polarized by a polarizing element (39).

5. The interferometry system according to Claim 1, wherein the separation and combination optical member is a polarizing beam splitter.

6. The interferometry system according to Claim 1, wherein the optical separator is a non-polarizing beam-splitter.

7. The interferometry system according to Claim 1, further comprising:
a quarter-wave plate (28b) disposed between the separation and combination optical member and the reference mirror;
a quarter-wave plate (28a) disposed between the separation and combination optical member and the measurement target; and
quarter-wave plates (33c, 33e) disposed between the optical separator and the photoelectric sensors.

8. The interferometry system according to Claim 1, further comprising non-polarizing beam-splitters disposed between the optical filters and the photoelectric sensors.

9. An interferometry system as claimed in any preceding claim in which the optical filter configured to allow a beam having the first wavelength to pass therethrough is configured not to transmit a beam having the second wavelength, and the optical filter configured to allow a beam having the second wavelength to pass therethrough is configured not to transmit a beam having the first wavelength.
